# EUROPÄISCHE PATENTANMELDUNG

(11) **EP 1 911 622 A1**
(43) Veröffentlichungstag der Anmeldung: **16.04.2008**
(21) Anmeldenummer: 07018154.0
(22) Anmeldetag: 15.09.2007
(51) Int. Cl.: B60K 6/00

(54) **Antrieb für ein Kettenfahrzeug**

(30) Priorität: 12.10.2006 DE 102006048737
(71) Anmelder: Rheinmetall Landsysteme GmbH, 24107 Kiel (DE)
(72) Erfinder: Bernhard, Björn, 24107 Kiel (DE)
(74) Vertreter: Dietrich, Barbara

(57) **Zusammenfassung**

Vorgeschlagen wird ein Antrieb für ein Kettenfahrzeug mit einem Verbrennungsmotor (1), der über eine nachgeschaltete Antriebsstufe (2) mit zwei Kettenantriebsrädern über zwei Abtriebsstufen (5, 6) in Wirkverbindung steht, wobei der Verbrennungsmotor (1) ständig mit der Antriebsstufe (2) verbunden ist, die Antriebsstufe (2) als auch die Abtriebsstufen (5, 6) durch jeweils ein Planetengetriebe gebildet werden, der Antriebsstufe (2) mindestens ein Generator (12) zugeschaltet werden kann, und Motore (7, 8) mit den Abtriebsstufen (5, 6) derart zusammenwirken, dass das Fahrzeug über diese auch gelenkt werden kann.

## Beschreibung

Die Erfindung betrifft einen Antrieb für ein Kettenfahrzeug nach dem Oberbegriff des Patentanspruchs 1.

Ein Mehrbedarf an elektrischer Leistung zur Versorgung des Bordnetzes macht auch bei Kettenfahrzeugen eine Größerdimensionierung der Stromerzeugungsanlage notwendig. Aus diesen Gründen wird in den letzten Jahren immer mehr in Betracht gezogen, die Bereitstellung der elektrischen Leistung aus einem elektrischen Fahrantrieb zu realisieren. Darüber hinaus bieten elektrische Fahrantriebe die Möglichkeit einer so genannten Schleichfahrt aus einem elektrischen Energiespeicher, ohne dass der Verbrennungsmotor arbeitet. Dies birgt jedoch den Nachteil in sich, dass Verluste insbesondere bei der Umwandlung mechanischer Leistung in elektrischer Leistung und wieder zurück auftreten.

In der DE 296 07 651 U1 wird ein kettengetriebenes Pistenfahrzeug offenbart, welches einen Verbrennungsmotor aufweist, der über einen Generator sowie wenigstens einen Elektromotor und einem Getriebe mit einem Turrasrad einer jeder Fahrkette antriebsverbunden ist. Der Elektromotor ist im Schiebebetrieb als Stromerzeuger für als elektrohydraulische oder elektrische Antriebe ausgebildete Nebenantriebe schaltbar. Bei Talfahrt oder Schiebebetrieb kann der Elektromotor als Bremse eingesetzt werden, wobei gleichzeitig eine Energierückspeisung durch die generatorische Wirkung des Elektromotors erfolgen kann.

Aus der DE 198 45 494 A1 ist die Verwendung eines Planetengetriebes bekannt, welches zwischen einem Elektromotor und einem Seitenvorgelege zur Übertragung der Antriebsbewegung eingebunden ist. Das Seitenvorgelege umfasst dabei ein in eine Kette eingreifendes Antriebsrad, das auf einer Seitenvorgelegetrommel fest angeordnet ist.

Eine elektrisch-mechanische Antriebsanlage für ein Vollkettenfahrzeug wird in der DE 37 28 171 C2 beschrieben. Ein Elektromotor treibt hierbei über eine Differentialgetriebeanordnung die Kettenantriebsräder. Die Lenkung erfolgt durch einen weiteren Elektromotor.

Die Stromversorgung beider erfolgt über eine Steuer- und Regeleinrichtung von einem elektrischen Generator, der von einem Dieselmotor angetrieben wird. Kombiniert werden somit elektrische Motore und mechanische Getriebe in der Weise, dass der Leistungstransfer zwischen den Kettenantriebsrädern von der einen auf die andere Fahrzeugseite nicht elektrisch erfolgt, sondern mechanisch, dass jedoch die Antriebsleistung und die Lenkleistung von Elektromotoren erzeugt wird.

Mit der DE 199 41 705 A1 wird ein Antriebsstrang publiziert, umfassend eine Antriebseinheit mit einer Antriebswelle, eine Abtriebeinheit sowie eine in Wirkverbindung mit diesen stehende Maschine. Diese elektrische Maschine wird dabei zumindest als Motor und als Generator eingesetzt, zumindest jedoch als Anlasser, gegebenenfalls bis zum ausschließlichen Betrieb des Fahrzeuges mit der elektrischen Maschine. Die Maschine ist zwischen zwei schaltbaren Kupplungen sowohl vom Antriebs- als auch von der Abtriebseinheit abkoppelbar.

Die DE 195 21 795 A1 beschäftigt sich mit einem elektro-mechanischen Überlagerungsgetriebe für ein Kettenfahrzeug. Dieses dient zur Lenkung und besitzt wenigstens zwei feste mechanische Übersetzungen, die entsprechend mindestens zwei Kurvenradien bewirken. Zudem werden das Zwischenschalten einer automatischen Lenkradienumschaltung sowie eine Steuerung angeregt.

Aus der DE 10 2004 009 030 A1 ist eine weitere elektrische-mechanische Antriebsanlage für ein Kettenfahrzeug bekannt, bei der das Kettenfahrzeug alternativ durch einen Verbrennungsmotor oder eine mit einem elektrischen Energiespeicher verbindbare elektrische Maschine (beispielsweise für Schleichfahrten) angetrieben werden kann. Dabei ist die elektrische Maschine über eine schaltbare Kupplung mit dem Verbrennungsmotor koppelbar. Sofern der Verbrennungsmotor und die elektrische Maschine miteinander gekoppelt sind, ist die elektrische Maschine sowohl als Elektrogenerator als auch als Elektromotor betreibbar und derart ausgelegt, dass sie im Generatorbetrieb die Versorgung der Verbraucher des Kettenfahrzeuges, insbesondere auch eventueller elektrischer Waffen, mit Strom sicherstellt. Sofern die elektrische Maschine im gekoppelten Zustand als Elektromotor betrieben wird, erfolgt durch Zufuhr elektrischer Energie aus dem Energiespeicher eine zusätzliche Beschleunigung des Kettenfahrzeuges durch den Elektromotor. Außerdem kann der Elektromotor den Startvorgang des Verbrennungsmotors einleiten und im Generatorbetrieb als elektrische Bremse dienen, wobei Energie in den elektrischen Energiespeicher zurückgespeist wird.
Insbesondere die beiden letztgenannten mechanische-elektrisch-leistungsverzweigten (mel-) Getriebe bauen auf bekannte Schalt-, Wende- und Lenkgetriebe aus und haben daher einen hohen Anteil komplexer mechanischer Baugruppen.

Die Erfindung stellt sich die Aufgabe, einen Fahrantrieb für ein Kettenfahrzeug anzugeben, der sehr kompakt aufgebaut ist und ein geringeres Gewicht als bei vergleichbaren Kettenfahrzeuge aufweist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, dass der Fahrantrieb des Kettenfahrzeuges unter konsequenter Ausnutzung der Möglichkeit eines mechanisch-elektrisch-leistungsverzweigten Antriebes realisiert wird, wobei die Anzahl an Baugruppen als solches reduziert und bei gleichzeitigem vermehrten Einsatz identischer Baugruppen die Produktionskosten gesenkt werden. Hauptbestandteile des mechanisch-elektrisch-leistungsverzweigten Getriebes sind dabei drei Planetengetriebe, zwei so genannte Fahrmotore und ein Leistungsmodul. Ein Wendegetriebe kann eingebunden sein.

Erfindungsgemäß besteht also eine kontinuierliche mechanische Verbindung mit einer auf einem Planetengetriebe basierenden Antriebsstufe zur elektrisch mechanischen Drehmoment-Drehzahl-Überlagerung und zwei auf einem Planetengetriebe basierenden Abtriebsstufen zur Drehmoment-Drehzahl-Überlagerung zwischen Verbrennungsmotor und den Kettenrädern, wobei mittels den zwei auf die Abtriebsstufen wirkenden Fahrmotoren durch Drehmoment-Drehzahl-Überlagerung die Lenkbewegung des Fahrzeuges hervorrufen. Dies ermöglicht einen kompakten Aufbau des erfindungsgemäßen Antriebes, da der Fahrantrieb durch die Fahrmotore ohne ein Schaltgetriebe auskommt. Die Lenkung erfolgt durch die rechts und links angeordneten Fahrmotore derart, dass eine Beschleunigung des einen Motors sowie ein Bremsen des anderen eine Lenkbewegung des Fahrzeuges bewirkt.

Es handelt sich hierbei vorzugsweise um einfache Planetenstufen.

An der mechanischen Antriebsstufe ist des Weiteren mindestens ein Generator zur Erzeugung elektrischer oder Einspeisung mechanischer Leistung positioniert. Die als Generator und Motor betreibbare Maschine wird vorzugsweise nicht als eigenständigen Antrieb für das Kettenfahrzeug verwendet, sondern derart ausgelegt, dass sie einerseits lediglich zur Unterstützung des Verbrennungsmotors (z.B. Erhöhung der Beschleunigung beim Anfahren des Kettenfahrzeuges) herangezogen wird und andererseits die Stromversorgung der Verbraucher des Kettenfahrzeuges sicherstellt. Außerdem soll die elektrische Maschine auch in an sich bekannter Weise die Einleitung des Startvorganges und der Bremsvorgänge übernehmen. Durch diese eingeschränkte Verwendung können sowohl die elektrische Maschine als auch der Energiespeicher relativ klein gehalten werden, was zu einem geringeren Gewicht führt.

Weitere Vorteile neben dem kompakten und einfachen mechanischen Aufbau, dass ein mechanisches oder hydraulisches Kupplungssystem als auch ein mechanisches Schaltgetriebe entfallen können.

Weitere Einzelheiten und Vorteile der Erfindung ergeben sich aus den folgenden, anhand von Figuren erläuterten Ausführungsbeispielen.

### Es zeigen:

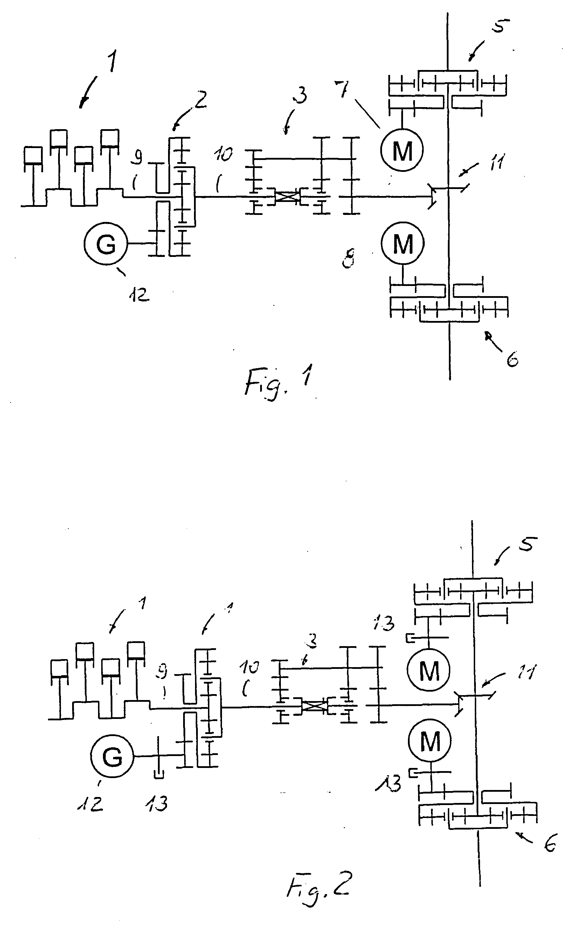

Fig.1 und 2 schematisch zwei Ausführungsbeispiele eines erfindungsgemäßen Antriebes.

In Fig.1 ist mit 1 ein Fahrantrieb, ein Verbrennungsmotor, für ein Kettenfahrzeug (nicht näher dargestellt, da bekannt) bezeichnet. Diesem sind eine Antriebsstufe 2 sowie in einer bevorzugten Ausführung ein Wendegetriebe 3 nachgeschaltet. Dieses wirkt mit den Abtriebsstufen 5, 6 zusammen, die ihrerseits jeweils in nicht näher dargestellte Seitenvorgelege eines Kettenantriebes zur Antriebsübertragung eingreifen (siehe beispielsweise DE 198 45 494 A1). Mit 12 ist ein Generator gekennzeichnet, welcher direkt mit dem Abtrieb 2 in funktionaler Verbindung steht (wird noch ausgeführt).

Mit je einem Abtrieb 5, 6 sind jeweils ein Motor 7, 8 verbunden und bilden das so genannte Lenkgetriebe des nicht näher dargestellten Fahrzeuges.

Die Antriebsstufe 2 als auch die Abtriebsstufen 5 und 6 werden bevorzugt durch einstufige Planetengetriebe gebildet.

Für den Fahrantrieb greift eine Welle 9 des Verbrennungsmotors 1 in bekannter Art und Weise an das Planetengetriebe der Antriebsstufe 2 an, welches seinerseits mittels einer Welle 10 das Wendegetriebe 3 in Aktion bringt. Das Wendegetriebe 3 treibt über eine Zahnradkombinatiön 11 oder dergleichen die Abtriebsstufen 5, 6 an.

Dieses Wendegetriebe 3 hat insbesondere für das Rückwärtsfahren des Fahrzeuges seine Bedeutung und kann entfallen, wenn auf eine schnelle Fahrt beim Rückwärtsfahren verzichtet werden kann. In diesem Fall greift die Welle 10, die durch die Antriebsstufe 2 angetrieben wird, direkt auf die Zahnradkombination 11. Über die Abtriebsstufen 5,6 werden dann nicht näher dargestellte Ketten des Fahrzeuges angetrieben.

### Die Funktionsweise ist wie folgt:

Mit Starten des Verbrennungsmotors 1 erfolgt ein Einregeln der Verbrennungsmotorzahl für ein maximales Anfahrmoment. Die Hohlräder der Abtriebsstufen 5, 6 werden über die Fahrmotore 7, 8 abgebremst, das Fahrzeug fährt an.

Zur Beschleunigung des Fahrzeuges werden die Hohlräder weiterhin abgebremst, während der Generator 12 die Antriebsstufe 2 durch motorischen Betrieb stabilisiert. Dabei überlagert sich die Antriebsdrehzahl des Verbrennungsmotors 1 mit der Drehzahl des Generators 12. Die elektrische Leistungsbereitstellung erfolgt durch die Fahrmotore 7, 8 sowie eine im Fahrzeug vorhandene oder vorzusehende Stütz- und Speicherbatterie (nicht näher dargestellt). Mit Erreichen der Hohldrehzahl "0" wird, da die Anfahrübersetzung ausgeschöpft ist, die Drehzahl des Verbrennungsmotors 1 erhöht, während der Generator 12 seinen generatorischen Betrieb einnimmt. Ein weiteres Beschleunigen kann durch die Fahrmotore 7, 8 erfolgen.

Das Bremsen kann durch ein negatives Beschleunigen der Fahrmotore sowie positives Beschleunigen erfolgen oder zusätzlich zu den bekannten mechanischen Feststellbremsen an en beiden Abtrieben zur Unterstützung des Bremsvorganges herangezogen werden. Ein entsprechendes Ausführungsbeispiel ist in Fig.2 dargestellt. Dabei sind die mechanischen Bremsen mit 13 bezeichnet.

Das Lenken erfolgt mit Hilfe der beiden Fahrmotore 7, 8 durch Einstellen einer Relativgeschwindigkeit der Fahrmotore 7, 8 zueinander.

Zum Fahrtrichtungswechsel wird das Wendegetriebe 3 lastfrei durch die Fahrmotore 7, 8 sowie den Generator 12 geregelt. Die Wendeschaltung wird ausgerückt und die Fahrmotore 7, 8 sowie der Generator 12 synchronisieren die Relativzahl im Wendegetriebe 3 von 0 positiv auf 0 negativ (oder umgekehrt). Die Wendeschaltung wird wieder eingerückt und das Wendegetriebe 3 belastet. Dies hat den Vorteil, dass das Fahrzeug beim Umschalten nicht stehen muss.

## Patentansprüche

1. Antrieb für ein Kettenfahrzeug mit einem Verbrennungsmotor (1), der über eine nachgeschaltete Antriebsstufe (2) mit zwei Kettenantriebsrädern über zwei Abtriebsstufen (5, 6) in Wirkverbindung steht, wobei der Verbrennungsmotor (1) ständig mit der Antriebsstufe (2) verbunden ist, **dadurch gekennzeichnet, dass**
- die Antriebsstufe (2) als auch die Abtriebsstufen (5, 6) durch jeweils ein Planetengetriebe gebildet werden, wobei
- der Antriebsstufe (2) mindestens ein Generator (12) zugeschaltet werden kann, und
- Motore (7, 8) mit den Abtriebsstufen (5, 6) derart zusammenwirken, dass das Fahrzeug über diese auch gelenkt werden kann.

2. Antrieb nach Anspruch 1, **dadurch gekennzeichnet, dass** die Motore (7, 8) und / oder der wenigstens eine Generator (12) zum Beschleunigen, Verzögern und / oder Bremsen eingesetzt werden können.

3. Antrieb nach einem der Ansprüche 1 oder 2, **dadurch gekennzeichnet, dass** die Motore (7, 8) und / oder der Generator (12) aus einem elektrischen Energiespeicher gespeist werden und in diesen rückspeisen können.

4. Antrieb nach einem der Ansprüche 1 bis 3, **dadurch gekennzeichnet, dass** zwischen der Antriebsstufe (2) und den Abtriebsstufen (5, 6) ein Wendegetriebe (3) zum Fahrtrichtungswechsel angeordnet ist.

5. Antrieb nach einem der Ansprüche 1 bis 4, **dadurch gekennzeichnet, dass** die Motore (7, 8) sowie der Generator (12) zur Unterstützung des Verbrennungsmotors (1) beim Starten, Beschleunigen und Bremsen herangezogen werden können.
